# EUROPEAN PATENT APPLICATION

(11) **EP 4 324 328 A1**
(43) Date of publication of application: **21.02.2024**
(21) Application number: 22191203.3
(22) Date of filing: 19.08.2022
(51) Int. Cl.: A01M 29/08, A01M 29/10, A01M 29/16, A01M 29/00, A01M 27/00

(54) **AUTONOMOUS ANTI-COLLISION SYSTEM**

(71) Applicant: CSEM Centre Suisse d'Electronique et de Microtechnique SA - Recherche et Développement, 2002 Neuchâtel (CH)
(72) Inventor: JOKIC, Petar, 8038 Zürich (CH)
(74) Representative: P&TS SA (AG, Ltd.)

(57) **Abstract**

The present invention concerns an autonomous anti-collision system (1) for avoiding a collision between a target moving body (3) and a surface (2), the system comprising:
an energy-harvesting unit (10) for harvesting energy necessary to the functioning of the system,
a sensing unit (11) for taking images of the surrounding environment,
a first computing unit (12) connected to the sensing unit (11) for detecting a moving body in the surrounding environment and determining if the moving body is the target moving body (3), and for generating a first output if the moving body is the target moving body (3),
a second computing unit (13) connected to the first computing unit (12), for estimating a position, a speed and/or a trajectory of the target moving body (3) based on the images from the sensing unit (11) and on the detection from the first computing unit (12), and for computing a probability of collision of the target moving body (3) with the surface based on the position, the speed and/or the trajectory, the second computing unit (13) being triggered based on the first output,
a deterrence unit (14) connected to the second computing unit (13) for deterring the target moving body (3) from colliding with the surface (2), the deterrence unit (14) being triggered based on the collision probability.

The anti-collision system (1) allows to minimize its energy consumption.

## Description

### Technical domain

The present invention concerns an autonomous anti-collision system for avoiding a collision between a target moving body (e.g. a target animal, for example and in a non-limiting way a flying animal, such as a bird) and a surface (e.g. a window).

### Related art

In some contexts, it is desirable to avoid moving bodies to collide with a surface, e.g. a window. Therefore, anti-collision systems for avoiding a collision between moving body and a surface are known. They detect the presence of those moving bodies and deter them, e.g. by producing a stimulus which startles or scares them.

In this context, the expression "moving body" refers to any object, animal or human being which is in movement around the anti-collision system, e.g. (flying) animals, but also other objects such as, among others, vehicles, flying objects like drones, human beings, non-flying animals such as cats, dogs, foxes, wolves, insects, etc.

Some of those known systems rely on video object detection based on machine-learning processor units, as neural processor units as a means of identifying moving bodies for deterring.

An example of such a system is disclosed in the document US2020323193. The disclosed system comprises a battery and it is autonomous. A charge controller is connected to the battery and can receive power from a solar panel or other external sources of electrical power.

Although the described system is autonomous, its energy consumption is not optimized, activating the energy hungry deterrence whenever the object is in the field of view. Moreover, this system has a parallelepiped shape, and it is not compact: therefore, it is not adapted to be efficiently integrated in a surface such as a window.

Therefore, there is a need of an anti-collision system that overcomes the shortcomings and limitations of the state of the art.

### Short disclosure of the invention

An aim of the present invention is the provision of an anti-collision system that overcomes the shortcomings and limitations of the state of the art.

Another aim of the invention is the provision of an anti-collision system wherein the energy consumption is optimized (or minimized).

Another aim of the invention is the provision of an anti-collision system alternative to the systems of the state of the art.

Another (optional) aim of the invention is the provision of an anti-collision system more compact with respect to the systems of the state of the art.

According to the invention, these aims are attained by the object of the attached claims, and especially by an autonomous anti-collision system for avoiding a collision between a target moving body and a surface.

In this context, the expression "target moving body" refers to a moving body belonging to a given category of bodies of interest. This category of interest is usually a category of animals for which a collision with the surface on which the system is fixed is to be prevented. These categories may be for example birds, specific bird sub-species, insects, rodents, foxes, or wolves. However, as previously mentioned, depending on the field of application, the category could comprise moving objects or persons.

According to the invention, the system comprises:
- an energy-harvesting unit for harvesting energy necessary to the autonomous functioning of the system,
- a sensing unit for taking images of the surrounding environment,
- a first computing unit connected to the sensing unit for detecting a moving body in the surrounding environment and determining if the moving body is the target moving body, and for generating a first output if the moving body is the target moving body,
- a second computing unit connected to the first computing unit, for estimating a position, a speed and/or a trajectory of the target moving body based on the images from the sensing unit and on the detection from the first computing unit, and for computing a probability of collision of the target moving body with the surface based on the position, the speed and/or the trajectory, the second computing unit being triggered based on the first output,
- a deterrence unit connected to the second computing unit for deterring the target moving body from colliding with the surface.

According to the invention, the deterrence unit is triggered based on the collision probability.

The autonomous anti-collision system according to the invention is therefore an energy-saving system. In fact, it has a hierarchical structure wherein each unit is only triggered if needed. For example, the second computing unit is triggered based on the (first) output of the first computing unit, and the deterrence unit is triggered based on the collision probability computed by the second computing unit. For example, the deterrence unit is triggered only if the collision probability computed by the second computing unit is high. Otherwise, it is not triggered.

In other words, the operating mode of each unit of the system according to the invention is conditioned by the reception of a particular output from a preceding unit, so that a unit is enabled only when it is really needed and tuned off otherwise.

In one embodiment, the system according to the invention is arranged to be fixed to the surface.

In order to increase the compactness of the system, all the units can be arranged in a flat patch with a maximal thickness of at most 1.5 cm, preferably at most 1 cm and/or with a maximal dimension of the flat patch of at most 30 cm, preferably at most 10 cm. This embodiment allows to obtain a compact system, that can be easily and efficiently fixed to a surface as a window.

The first computing unit can be arranged for generating a second output if the moving body is within a programmable detection range of at most 30 m from the system, the second computing unit being triggered based also on the second output. This embodiment allows to improve the hierarchical structure of the system, so as to improve its energy saving.

The first computing and/or the second computing unit can be machine-learning processor units.

The machine-learning processor units can be neural processor units, each neural processor unit implements a shallow neural network and a deep neural network, the deep neural network being triggered based on an output of the shallow neural network.

The shallow neural network can alternatively be a less computationally complex network than the deep neural network.

The deep neural network can alternatively be a more computationally complex network than the shallow neural network.

The first and the second computing units can be integrated in a single computing unit.

At least a part of the sensing unit can be integrated with the first and/or the second computing unit(s), so as to form a single computing unit.

The computing units can further be split in sub-units and/or computing stages (to further improve hierarchical power savings).

The sensing unit may comprise at least one high-resolution image capture device.

The sensing unit may comprise an additional low-power sensor, which triggers the image taken by the sensing unit.

The surface may be a transparent and/or reflective surface, preferably a window.

The energy harvesting unit may comprise at least one of the following: a solar cell, a photovoltaic cell, a thermoelectric generator, a piezoelectric generator and/or an electromagnetic generator.

The autonomous system can be adapted to be integrated in or on the surface.

The deterrence unit may comprise at least one of the following devices: a laser-based deterrence device, a sound wave based deterrence device, an optical deterrence device and/or a mechanical deterrence system as a liquid spraying deterrence device or a solid projection deterrence device. Other implementations of the deterrence unit can include destructive deterrence devices which aim at destroying or harming the moving object before the collision with the surface.

The deterrence unit may be steered and/or focused towards the position of the target moving body.

### Short description of the drawings

Exemplar embodiments of the invention are disclosed in the description and illustrated by the drawings in which:
Figure 1 illustrates schematically a top view of an autonomous anti-collision system according to one embodiment of the invention.
Figure 2 illustrates schematically a perspective view of an autonomous anti-collision system according to one embodiment of the invention fixed on a surface, and of an animal as an example of a moving body.
Figure 3 is a flowchart of an operating mode of an autonomous anti-collision system according to one embodiment of the invention.

### Examples of embodiments of the present invention

In the context of this disclosure, the expression "moving body" refers to any object, animal or human being which is in movement around the system. Although in the following description, it is often referred to an animal, or more specifically to flying animals, for the sake of simplicity, it is to be understood that the present invention is not limited to detecting and deterring (flying) animals, but can also be used to detect and deter other objects such as, among others, vehicles, flying objects like drones, human beings, non-flying animals such as cats, dogs, foxes, wolves, insects, etc.

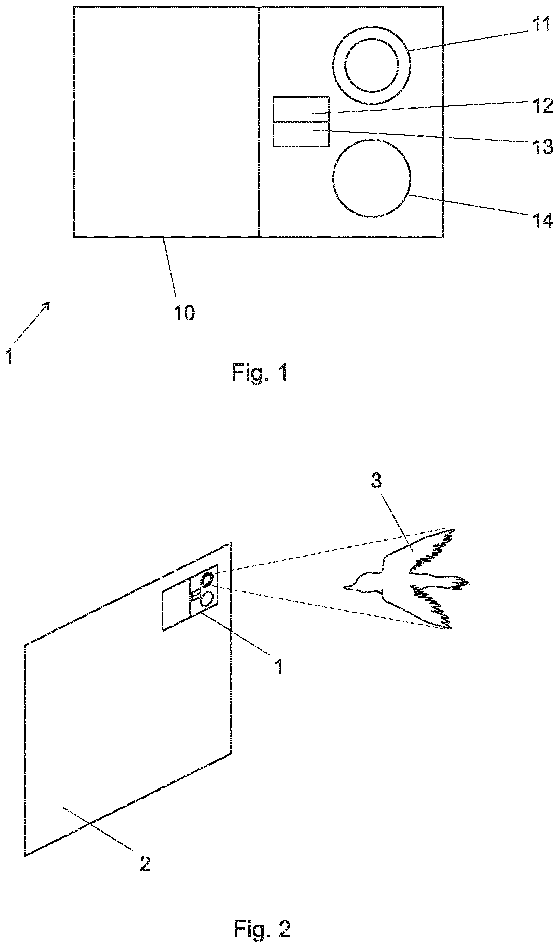

As schematically illustrated in Figure 1, the autonomous system 1 of the present invention comprises an energy-harvesting unit 10, a sensing unit 11, a first computing unit 12, a second computing unit 13 and a deterrence unit 14.

In one embodiment, the sensing unit continuously takes images of the surrounding environment. Based on these images, the first computing unit 12 detects the moving body and determines if the moving body is a target moving body 3 (a bird in the example of Figure 2). If the first computing unit 12 determines that the moving object is indeed a target moving body, the second computing unit 13 is triggered based on an output of the first computing unit 12. This second computing unit 13 computes a position, a speed and/or a trajectory of the target moving body 3 based on the images taken by the sensing unit 11 and on the detection performed by the first computing unit 12, and computes a probability of collision of the animal with the surface. The probability is based on the computed position, speed and/or trajectory.

Finally, the collision probability can be compared to a threshold. In one preferred embodiment, if it is above the threshold, the deterrence unit 14 is triggered, and the target moving body is deterred from colliding with the surface 2.

The energy-harvesting unit 10 supplies power for the other units of the system 1, meaning that it collects energy from its environment without needing any action for the system 1 to operate.

In the embodiment illustrated in Figure 2, the autonomous system 1 is fixed on a surface 2. The sensing unit 11 captures an image that contains an animal 3, in this case, a bird, is approaching the surface 2.

The system 1 is hierarchically configured so that the energy consumption is minimized. This means that the operating mode of each unit 11 to 14 may be conditioned by the reception of a particular output from a preceding unit so that a unit is functioning only when it is really needed and tuned off otherwise.

As an example, the second computing unit 13, which is in charge of computing the probability of collision, can be only activated if the first computing unit 12 determines that a moving body is indeed a target moving body. Another example is the deterrence unit 14 that can be configured to be only triggered if the probability of collision is e.g. sufficiently high (i.e. above a given threshold).

In various applications of the present invention, the size of the autonomous system 1 is critical. Indeed, it is often desired that the size of the system 1 is substantially smaller with respect to the size of the surface 2. As an example, if the system 1 is targeted for preventing birds from colliding with windows of a building, it can be important for practical and/or esthetical reasons that the system 1 does not obstruct the window. Therefore, compact systems are required.

In a particular embodiment, the autonomous system 1 is arranged as a flat patch (visible e.g. in Figures 1 and 2) that can be fixed on the surface 2. The maximal thickness of the patch is at most 1.5 cm, preferably at most 1 cm. A maximum dimension of the patch is at most 30 cm, preferably at most 10 cm. As illustrated in Figures 1 and 2, the flat patch can be rectangular: in this case, the maximal dimension of the patch represents the longer side of the rectangle. Of course, the patch can have other suitable shapes, in which case, the maximal dimension of the patch can be the diameter of the patch or the longest side of the patch.

The sensing unit 11 comprises an image capture device (not illustrated) for taking images of a moving body in the vicinity of the system 1. The image capture device may be a photo camera and/or a video camera and the images may be taken in any wavelength that allows a determination of nature of the moving body by a ML algorithm. In particular, any visible, infrared and/or thermic camera can be used in the sensing unit. High-resolution image capture devices allow a better recognition of the moving body from the first computing unit 12. However, in some cases low-resolution cameras may be sufficient to determine the nature of the moving body.

The expression "high-resolution" refers here to images having a resolution of at least 1 Mpixel. On the contrary "low-resolution" images are images with a resolution which is less than 1 Mpixel.

In a particular embodiment, the sensing unit 11 may further comprises a low-power sensor (not illustrated) which detects that a moving body is moving in the vicinity of the system 1. This low-power sensor can trigger the activation of the image capture device. This hierarchical structure allows to save more energy: in fact, when no body is moving, only the low-power sensor is active, and the image capture device can be turned off or put in standby. If a high-resolution image capture device (or other power-hungry image capture devices) is required, it can advantageously be coupled to a low-power sensor that only activates the high-resolution device if some conditions are met.

The low-power sensor may be for example a low-resolution image and/or video camera or a high-resolution image sensor supporting sub-sampling, an infrared passive motion sensor, a microwave motion sensor, etc.

The sensing unit 11 may also include additional tracking devices (not illustrated) in order to better track the moving body. A RADAR and/or LIDAR and/or ultrasound object detection device may for example track a target animal recognized by the first computing unit 12. As before, the tracking device may be hierarchically configured with the other units of the system 1, so that it is only activated when needed, for example when the first computing unit 12 has determined that a moving body is a target animal.

Such tracking devices may also be used to gather information on the number or the behaviour of target moving bodies in the vicinity of the system 1. For example, windows producers can test their products in-field by measuring the collisions, the distance at which the birds recognize that there is an obstacle, or the distance at which they change direction. It may also be used to trigger other protection system by automatically informing a house control system that a collision probability is high, which could trigger other countermeasures, e.g. shading systems, lighting systems, lowering blinds.

The first computing unit 12 is connected to the sensing unit 11 and receives the images of a moving body taken by the image capture device to process them such as to determine if the moving body belongs to a given category of bodies of interest. This category of interest is usually a category of animals for which a collision with the surface on which the system is fixed to is to be prevented. These categories may be for example birds, specific bird sub-species, insects, rodents, foxes, or wolves. However, as previously mentioned, depending on the field of application, the category could comprise moving objects or persons.

The first computing unit 12 generates a first output corresponding to the category in which the moving body has been classified by first the computing unit. This first output is then used to either trigger the second computing unit 13 which will compute a probability of collision, or to put the system back in its original state in which it waits to detect a moving body.

Alternatively, or complementarily, the first computing unit 12 may generate a second output if the animal is within a programmable detection range of at most 30 m from the system. This may increase the energy saving of the system as it can prevent the second computing unit 13 to be active although the target moving body is too far from the surface to make sufficiently accurate predictions and/or present a risk of collision.

The image classification performed by the first computing unit 12 relies on machine learning (ML) algorithms that are executed on-board. A wide variety of existing classification algorithms such as artificial neural networks, convolutional neural networks, K nearest neighbours, decision trees, random forests or support vector machines, can be used for this purpose.

Advantageously, the ML algorithms are run on dedicated ML hardware. The first computing unit 12 may therefore comprise ML processor/accelerator units that are CPU (Central Processing Unit), GPU (Graphics Processing Unit), TPU (Tensor Processing Unit), NPU (Numeric Processing Unit), and/or other custom accelerator based.

The second computing unit 13 is connected to the first computing unit 12 (and in one embodiment also to the sensing unit 11). Its aim is to compute a collision probability between a recognized target moving body 3 and the surface 2 to which the system 1 is fixed. Based on the data provided by the sensing unit 11 and by the first computing unit 12, the second computing unit 13 is arranged to estimate a position, speed and/or a trajectory of the target moving body determined by the first computing unit 12. Based on this estimated position, speed and/or trajectory, the second computing unit 13 is arranged to compute the probability of collision.

The second computing unit 13 is triggered by the first output of the first computing unit 12. More precisely, if the first computing unit 12 has classified the moving body in a category of interest, for example a target animal, it sends a signal to the second computing unit 13 which will activate and process to the collision probability computation. Once again, this hierarchical configuration allows to save energy as the second computing unit 13 only proceeds to the computations when it is really needed.

In the case where the sensing unit 11 comprises additional tracking devices providing additional tracking data, the position, speed, and/or trajectory, as well as the collision probability computations can be improved and accelerated.

Since the computations processed by the second computing unit 13 do not necessarily require the execution of any particular ML algorithm, the second computing unit 13 may be a standard on-board CPU. Executing the computations on the less power-hungry device possible further improving the total energy efficiency of the autonomous system.

However, in more elaborate embodiments, the second computing unit 13 could also comprise ML adapted units as described above for the first computing unit 12. Indeed, all the position, speed and/or trajectory computations can be optimized using data gathered by the autonomous system over time, for example by means of ML algorithms applied to these data that are particular to the specific location and environment of the of the system 1.

In a particular embodiment, first and/or second computing units 12, 13 are neural processor units (NPU). In order to further improve the energy efficiency of the system, each NPU may implement a shallow neural network and a deep neural network, the deep neural network being triggered based on an output of the shallow neural network. This embodiment allows to save energy as the deep neural network is only used when needed. If the use of the shallow neural network is sufficient to perform the recognition/classification of the moving body and/or the optimizations of the computations, then the use of the deep neural network can be avoided.

Whenever the first and second computing units 12,13 share the same architecture, they can be implemented as a single computing unit. In addition to lowering the manufacturing costs, this allows the system to be more compact as only one computing unit is necessary.

Once the second computing unit 13 has computed the collision probability, a signal is generated to either trigger the deterrence unit 14 if the probability is e.g. sufficiently high, or to put the system 1 back in detection mode, or to proceed to a new collision probability computation. The expression "sufficiently high" is dependent on the particular details of the environment, and on the nature of the moving body that is to be deterred. Usually, a threshold value for the probability is predetermined and serves as a limit for triggering or not the deterrence unit 14. Alternatively, or complementarily, the threshold value can be automatically adapted by the second computing unit 13, for example if an environmental factor is likely to have an influence on the deterrence system or on the future trajectory of the moving body.

The deterrence unit 14 is responsible for preventing a target moving body 3 to enter in collision with the surface 2. As explained above, the activation of the deterrence unit 14 is conditioned to the reception of a signal from the second computing unit 13. It means that if the collision probability computed by the second computing unit 13 satisfies a given criterion (e.g. it is above a threshold), the deterrence unit 14 is activated and proceeds to deter the target moving body from colliding with the surface.

The deterrence unit 14 may be active or passive, meaning that it may send a particular stimulus to the target moving body to make it react and change its trajectory, and/or it may trigger a change in the surface itself so as to make it noticeable by the target moving body.

The particular implementation of the deterrence unit 14 may vary from numerous factors such as the type of moving body that is to be deterred, the surface on which the system 1 is fixed, the environment around the system or of the available energy that can be harvested by the energy-harvesting unit 10. Indeed, birds, insects or other animals won't all have the same reaction to a physical stimulus sent by the deterrence unit. Moreover, the environment of the surface may heavily influence the type of deterrence unit 14 as a sound-based deterrence unit can be well-suited for uninhabited zones but not recommended in an office building for example.

In an embodiment, the deterrence unit 14 may comprise one or more of the following: a laser-based deterrence device, a sound wave based deterrence device, an optical deterrence device, and/or a mechanical deterrence system as a liquid spraying deterrence device or a solid projection deterrence device. Other implementations of the deterrence unit can include destructive deterrence devices which aim at destroying or harming the moving body before the collision with the surface.

Laser-based deterrence devices are active deterrence devices operating by targeting the moving body (e.g. an animal) with a laser so as to provoke a physical, in this case visible, stimulus that cause the moving body to modify its trajectory.

Soundwave based deterrence devices are also active deterrence devices that generate an audio signal, in a frequency range that is adapted to the target moving body, causing the moving body (e.g. an animal) to modify its trajectory.

Optical deterrence devices can be active and/or passive deterrence devices. Indeed, they may target the moving body (e.g. an animal) with an optical signal such as a light flash, or they can modify the surface on which the autonomous system 1 is fixed so as to make it noticeable by the moving body. In a particular embodiment, the deterrence unit 14 operates by projecting the image of an obstacle on the surface 2 so that the moving body (e.g. an animal) modifies its trajectory to avoid the projected obstacle. Alternatively or complementarily, the surface may be shaded or illuminated to provoke the same reaction from the moving body. Alternatively or complementarily, the surface is transparent and can be turned opaque.

In some embodiments, the deterrence unit 14 can be steered and/or focused to a position of the target moving body. In particular, in the cases of laser and optical based deterrence devices, this steering is relevant in order to avoid energy losses by sending laser or optical signals in a direction which do not correspond to the estimated position of the moving body. Moreover, it can also limit the nuisances caused by the deterrence unit to other moving bodies (e.g. other animals) or to the direct environment around the autonomous system 1.

The energy-harvesting unit 10 is configured to harvest energy from an external power source and provide the power needed for the functioning of all other units of the autonomous system 1.

Although the autonomous system 1 of the present invention can be fixed on almost any kind of surface, it is particularly well adapted to transparent and/or reflective surface like windows. Indeed, such surfaces present a higher risk of collision due to their capacity to at least partially reflect the surrounding environment.

In a preferred embodiment, the energy-harvesting unit 10 comprises solar and/or photovoltaic cells. This embodiment is well-suited when the surface 2 is a transparent and/or reflective surface like a window. The efficiency of such cells allows the autonomous system to be small comparatively to the size of a window. This is valuable, both in terms of manufacturing costs and in terms of practical use of the window since it is desired that the system does not obstruct the view or modify the appearance of the window.

Depending on the location of the surface 2 on which the autonomous system 1 is to be fixed, another energy-harvesting unit 10 can be considered. In particular, thermoelectric generators, piezoelectric generators and/or electromagnetic generators can be used alternatively or complementarily to solar/photovoltaic cells.

The autonomous system 1 can be adapted to be integrated in the surface 2. The integration can be done during the surface manufacturing. In this embodiment, the surface 2 can then serve as a (transparent) housing for the autonomous system 1.

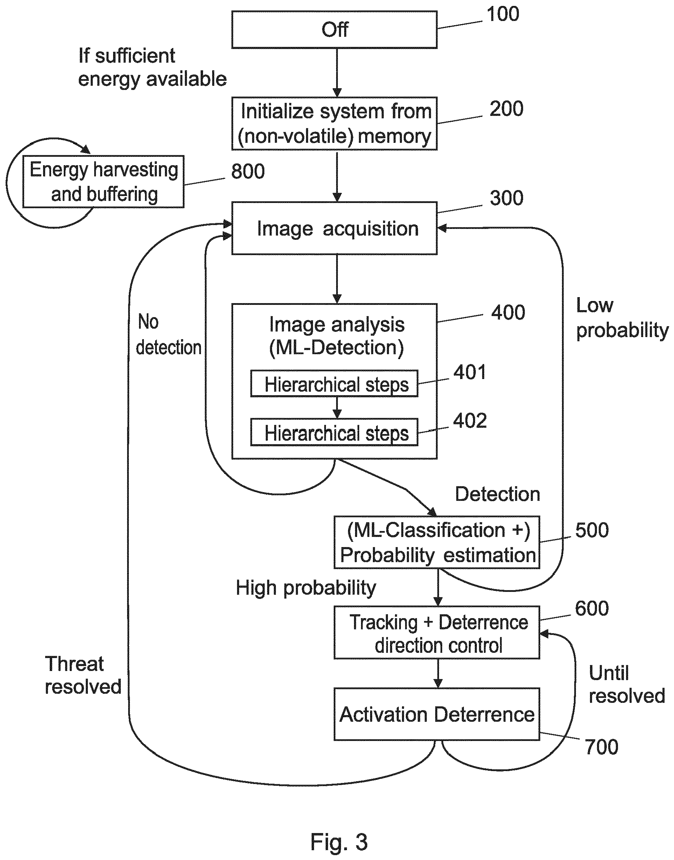

Figure 3 is a flowchart of an operating mode of an autonomous anti-collision system 1 according to one embodiment of the invention.

In step 100, the system 1 is turned off. If sufficient energy from the energy harvesting unit 10 is available, the system 1 can be initialised from a (non-volatile) memory of the system 1 in step 200. In this step the system can be reconfigured and programmed if needed.

In step 300, the image acquisition by the sensing unit 11 is then performed. The images are then analysed, e.g. by using a machine-learning processor unit (step 400). This analysis can be performed hierarchically (steps 401, 402).

If no target moving bodies are detected from the images, then the system 1 comes back to step 300 and continues the image acquisition. Otherwise, the system 1 (and in particular its second computing unit 13) is arranged to compute a probability of collision of the target moving body 3 with the surface based on the position, the speed and/or the trajectory of the target moving body 3 (step 500). This step could also be based on a machine-learning technique.

The probability of collision is then compared to a given threshold. In the embodiment of Figure 3, if this probability of collision is high (e.g. higher than the given threshold), the system 1 can be arranged to continue tracking the target moving object and to control the deterrence direction based on this tracking (step 600).

In this case, the deterrence unit 14 can be activated (step 700). Once the threat has been resolved, the system 1 comes back to the step 300 (image acquisition).

In the embodiment of Figure 3, if this probability of collision is low (e.g. lower than the given threshold), the system 1 comes back to the step 300 (image acquisition).

Steps 300 and/or 40X and/or 500 and/or 600 and/or 700 can work in parallel to account for multiple object simultaneously

Energy harvesting and buffering are continuously performed (step 800).

### List of reference numerals

- 1: Anti-collision system
- 10: Energy harvesting unit
- 11: Sensing unit
- 12: First computing unit
- 13: Second computing unit
- 14: Deterrence unit
- 2: Surface
- 3: Target moving body
- 100: Step "off"
- 200: Step "Initialize system from memory"
- 300: Step "Image acquisition"
- 400: Step "Image analysis"
- 401: Hierarchical steps
- 402: Hierarchical steps
- 500: Step "(ML-Classification and) probability estimation"
- 600: Step "Tracking and deterrence direction control"
- 700: Step "Activation deterrence"
- 800: Energy harvesting and buffering

## Claims

1. Autonomous anti-collision system (1) for avoiding a collision between a target moving body (3) and a surface (2),
the system comprising:
an energy-harvesting unit (10) for harvesting energy necessary to the autonomous functioning of the system,
a sensing unit (11) for taking images of the surrounding environment,
a first computing unit (12) connected to the sensing unit (11) for detecting a moving body in the surrounding environment and determining if the moving body is the target moving body (3), and for generating a first output if the moving body is the target moving body (3),
a second computing unit (13) connected to the first computing unit (12), for estimating a position, a speed and/or a trajectory of the target moving body (3) based on the images from the sensing unit (11) and on the detection from the first computing unit (12), and for computing a probability of collision of the target moving body (3) with the surface based on the position, the speed and/or the trajectory, the second computing unit (13) being triggered based on the first output,
a deterrence unit (14) connected to the second computing unit (13) for deterring the target moving body (3) from colliding with the surface (2), the deterrence unit (14) being triggered based on the collision probability.

2. Autonomous anti-collision system (1) according to claim 1, the system being arranged to be fixed to the surface (2).

3. Autonomous anti-collision system (1) according to one of claims 1 or 2, the system being a flat patch, a maximal thickness of the flat patch being at most 1.5 cm, preferably at most 1 cm and/or a maximal dimension of the flat patch being at most 30 cm, preferably at most 10 cm.

4. Autonomous anti-collision system (1) according to any of the preceding claims, wherein the first computing unit (12) is arranged for generating a second output if the target moving body (3) is within a programmable detection range of at most 30m from the system, the second computing (13) unit being triggered based also on the second output.

5. Autonomous anti-collision system (1) according to any of the claims 1 to 4, wherein, the first computing (12) and/or the second computing unit (13) are machine-learning processor units.

6. Autonomous anti-collision system (1) according to the preceding claim, wherein the machine-learning processor units are neural processor units, each neural processor unit implements a shallow or less complex neural network and a deep or more complex neural network, the deep neural or more complex network being triggered based on an output of the shallow or less complex neural network.

7. Autonomous anti-collision system (1) according to any of the preceding claims, wherein the first and the second computing units (12, 13) are the same computing unit.

8. Autonomous anti-collision system (1) according to any of the preceding claims, wherein the sensing unit (11) comprises at least one high resolution image capture device.

9. Autonomous anti-collision system (1) according to any of the preceding claims, wherein the sensing unit (11) comprises a low-power sensor, which triggers the image taken by the sensing unit (11).

10. Autonomous anti-collision system (1) according to any of the preceding claims, wherein the surface (2) is a transparent and/or reflective surface, preferably a window.

11. Autonomous anti-collision system (1) according to any of the preceding claims, wherein the energy harvesting unit (10) comprises at least one of the following: a solar cell, a photovoltaic cell, a thermoelectric generator, a piezoelectric generator and/or an electromagnetic generator.

12. Autonomous anti-collision system (1) according to any of the preceding claims, being configurated to be integrated in or on the surface (2).

13. Autonomous anti-collision system (1) according to any of the preceding claims, wherein the deterrence unit (14) comprises at least one of the following devices: a laser-based deterrence device, a sound wave based deterrence device and/or an optical deterrence device.

14. Autonomous anti-collision system (1) according to any of the preceding claims, wherein the deterrence unit (14) is steered and/or focused towards to the position of the target moving body.
